# EUROPEAN PATENT APPLICATION

(11) **EP 4 636 946 A1**
(43) Date of publication of application: **22.10.2025**
(21) Application number: 24171123.3
(22) Date of filing: 18.04.2024
(51) Int. Cl.: H01P 1/213, H01P 5/12

(54) **RADIO FREQUENCY NETWORK AND ANTENNA DEVICE**

(71) Applicant: Aptiv Technologies AG, 8200 Schaffhausen (CH)
(72) Inventor: VOLLBRACHT, Dennis, 8200 Schaffhausen (CH); RAZI, Navid, 8200 Schaffhausen (CH); FEIZ, Nooshin, 8200 Schaffhausen (CH)
(74) Representative: Manitz Finsterwald Patent- und Rechtsanwaltspartnerschaft mbB

(57) **Abstract**

A radio frequency network comprises an input port, a first output port, a second output port, a third output port, and a multiport filter. The multiport filter comprises a first filter port coupling the multiport filter to the input port, a second filter port coupling the multiport filter to the first output port and a third filter port coupling the multiport filter to the second output port. The multiport filter receives, at the first filter port, first electromagnetic energy having a first frequency and second electromagnetic energy having a second frequency, passes a first portion of the first electromagnetic energy to the second filter port, passes a second portion of the first electromagnetic energy to the third filter port, and reflects the second electromagnetic energy. The third output port is coupled in between the input port and the first filter port and outputs the second electromagnetic energy.

## Description

### FIELD

The present disclosure relates to a radio frequency network for road vehicle applications, and an antenna device comprising the radar frequency network.

### BACKGROUND

Radio frequency networks are used in road vehicle applications inter alia in radar systems to distribute radio frequency signals, for example between radar circuits and antenna devices. Radio frequency networks thereby constitute fundamental building blocks of these devices and the integration of radio frequency networks has become pivotal in enhancing the safety and functionality of road vehicles.

For example, in road vehicle radar systems, the seamless flow of radar signals between the radar circuits and the antennas is vital for accurate and timely detection of objects, obstacles, and potential hazards. This communication relies on well-designed radio frequency networks that efficiently handle the transmission, reception, and processing of signals across the desired frequency spectrum.

Key components within these radio frequency networks include frequency filters and power dividers. Frequency filters ensure that only signals within specific frequency bands are routed to specific parts of the networks. On the other hand, power dividers are employed to distribute the signals effectively, ensuring consistent power levels across different components of the radar system.

The design of radio frequency networks for road vehicle applications demands a compact and integrated approach. The limited space available in vehicles necessitates the development of systems that are not only high-performing but also space-efficient. Achieving a compact design is essential for seamless integration into the vehicle's structure without compromising on performance or functionality.

Moreover, an integrated design of radio frequency networks reduces the number of external components and potential points of failure. This integration enhances the robustness of the system while also contributing to its overall reliability and longevity.

### SUMMARY

The present disclosure provides a radio frequency network, a multiport filter, an antenna device, a radar device, and a road vehicle. Embodiments are given in the dependent claims, the description, and the drawings.

In one aspect, the present disclosure is directed at a radio frequency network for road vehicle applications. The radio frequency network comprises an input port, a first output port, a second output port, a third output port, and a multiport filter, wherein the multiport filter comprises a first filter port that couples the multiport filter to the input port, a second filter port that couples the multiport filter to the first output port and a third filter port that couples the multiport filter to the second output port. The multiport filter further is configured to receive, at the first filter port, first electromagnetic energy having a first frequency within a first frequency band and second electromagnetic energy having a second frequency within a second frequency band from the input port, to pass a first portion of the first electromagnetic energy from the first filter port to the second filter port and to pass a second portion of the first electromagnetic energy from the first filter port to the third filter port. The multiport filter furthermore is configured to reflect the second electromagnetic energy at the first filter port. Additionally, the third output port is coupled in between the input port and the first filter port of the multiport filter and the third output port is configured to output the second electromagnetic energy.

The radio frequency network according to the present disclosure provides a compact setup for frequency-selectively distributing electromagnetic energy to different output ports. This is achieved by integrating both a frequency filtering function and a power splitting function into a single device formed by the multiport filter. Furthermore, by connecting the third output port in between the input port and the first filter port of the multiport filter and by outputting the second electromagnetic energy reflected at the multiport filter via the third output port, a four-port device is realized that occupies little space.

The input port may connect the radio frequency network to an input guide that is configured to guide electromagnetic energy at the first frequency and at the second frequency, such as at all frequencies within the first frequency band and at all frequencies within the second frequency band. The input port may be directly connected to the input guide.

The first output port may connect the radio frequency network to a first output guide that is configured to guide electromagnetic energy at least at the first frequency, such as at least at all frequencies within the first frequency band. Likewise, the second output port may connect the radio frequency network to a second output guide that is configured to guide electromagnetic energy at least at the first frequency, such as at least at all frequencies within the first frequency band. The third output port may connect the radio frequency network to a third output guide that is configured to guide electromagnetic energy at least at the second frequency, such as at least at all frequencies within the second frequency band. For example, the third output guide may be configured to guide electromagnetic energy both at the first frequency and at the second frequency, such as both at all frequencies within the first frequency band and at all frequencies within the second frequency band.

Furthermore, the radio frequency network may comprise a first intermediate guide that couples the third output port to the input port. Additionally or alternatively, the radio frequency network may comprise a second intermediate guide that couples the third output port to the multiport filter. The first intermediate guide and the second intermediate guide may be configured to guide electromagnetic energy at the first frequency and at the second frequency, such as at all frequencies within the first frequency band and at all frequencies within the second frequency band.

With the radio frequency network, the second filter port may form the first output port and/or the third filter port may form the second output port. This provides for a compact structure of the radio frequency network.

The first electromagnetic energy may cover the entire first frequency band and/or the second electromagnetic energy may cover the entire second frequency band. Therefore, all properties of the radio frequency network described with respect to the first electromagnetic energy may hold true for first electromagnetic energy at all frequencies within the entire first frequency band and/or all properties of the radio frequency network described with respect to the second electromagnetic energy may hold true for second electromagnetic energy at all frequencies within the entire second frequency band.

For example, the multiport filter may be configured to receive at the first filter port first electromagnetic energy within the entire first frequency band and second electromagnetic energy within the entire second frequency band. Furthermore, the multiport filter may be configured to pass within the entire first frequency band a first portion of the first electromagnetic energy to the second filter port and a second portion of the first electromagnetic energy to the third filter port. Additionally or alternatively, the multiport filter may be configured to reflect at the first output port the second electromagnetic energy within the entire second frequency band.

A pass band of the multiport filter may comprise the first frequency band and a stop band of the multiport filter may comprise the second frequency band.

The first portion may cover the entire first frequency band and/or the second portion may cover the entire second frequency band. Therefore, the multiport filter may be configured to pass the first portion of the first electromagnetic energy received at the first filter port to the second filter port over the entire first frequency band and/or the multiport filter may be configured to pass the second portion of the first electromagnetic energy received at the first filter port to the third filter port over the entire first frequency band.

The multiport filter may be configured to completely distribute the first electromagnetic energy between the second filter port and the third filter port. Therefore, a sum of the first portion and the second portion may equal the first electromagnetic energy received at the first filter port. For example, a reflection of the first electromagnetic energy, such as of first electromagnetic energy at all frequencies within the first frequency band, may be less than -10 dB, such as less than -15 dB, less than -20 dB, less than -25 dB or less than -30 dB of the first electromagnetic energy.

The multiport filter may be configured to isolate the second filter port and/or the third filter port from the second electromagnetic energy at the second frequency, such as from the second electromagnetic energy at all frequencies within the second frequency band. Thereby, the multiport filter may pass less than -10 dB, such as less than -15 dB, less than -20 dB, less than -25 dB or less than -30 dB of the second electromagnetic energy at the second frequency, such as of electromagnetic energy at all frequencies within the second frequency band, from the first filter port to the second filter port and/or to the third filter port.

A reflection of the first electromagnetic energy, such as of first electromagnetic energy at all frequencies within the entire first frequency band, at the first filter port may be at least -2 dB, such as at least -1.5 dB or at least -1.0 dB of the first electromagnetic energy.

The multiport filter may comprise an integrated power splitter and at least one frequency filter. The integrated power splitter thereby may be coupled in between the first filter port and the frequency filter. Furthermore, the frequency filter may be coupled in between the power splitter and the second filter port.

The multiport filter may comprise a further frequency filter in addition to the at least one frequency filter. The further frequency filter may be coupled in between the power splitter and the third output port.

An input of the integrated power splitter may be directly coupled to the first filter port. For example, the multiport filter may be void of any additional filters in between the power splitter and the first filter port.

The multiport filter may comprise only two frequency filters. One of the two filters may be the at least one frequency filter and the other one of the two filters may be the further frequency filter.

With other embodiments, the frequency filter may also be coupled in between the integrated power splitter and the first filter port. The power splitter then may be coupled both between the second filter port and the frequency filter and between the third filter port and the frequency filter.

The frequency filter may be configured as a single-stage filter. For example, the frequency filter may comprise only a single filter element. Alternatively, the frequency filter may be configured as a multi-stage filter having, for example, multiple filter elements. Additionally or alternatively, the further frequency filter may be configured as a single-stage filter. For example, the further frequency filter may comprise only a single filter element. Alternatively, the further frequency filter may be configured as a multi-stage filter having, for example, multiple filter elements.

A filter element of the frequency filter, such as all filter elements of the frequency filter, may be configured as a resonator, such as a resonating cavity. Additionally or alternatively, a filter element of the further frequency filter, such as all filter elements of the further frequency filter, may be configured as a resonator, such as a resonating cavity. With a resonating cavity, the frequency response of the respective frequency filter is determined by the structure and dimensions of the outer delimiting walls of the resonating cavity. This is in contrast to resonators that are configured as other resonating structures, such as resonating posts, that also may be provided within a cavity. With these types of resonators, the structure and dimensions of the other resonating structures, such as the posts, determine the frequency response of the frequency filter.

The frequency filter and/or the further frequency filter may be configured as low pass filters. For example, the frequency filter and/or the further frequency filter may be configured as first order low pass filters. With other embodiments, the frequency filter and/or the further frequency filter may be configured as higher order low pass filters, such as second or third order low pass filters.

The multiport filter may be configured as an integrated device. The multiport filter may comprise a single conducting structure, such as a single hollow cavity, that is configured as both the integrated power splitter and the at least one frequency filter. For example, the multiport filter may comprise a splitter section that forms the integrated power splitter and a filter section that forms the frequency filter. In addition, the multiport filter may comprise a further filter section that forms the further frequency filter. The splitter section and/or the filter section and/or the further filter section each may form sections of the single conducting structure, such as sections of the single hollow cavity.

The radio frequency network may be configured to guide the electromagnetic energy as electromagnetic signals. For example, the radio frequency network may be configured to preserve a modulation of the electromagnetic energy, such as a phase modulation and/or an amplitude modulation, upon guiding the electromagnetic signals. Additionally or alternatively, the radio frequency network may be configured to preserve a pulse shape of the electromagnetic signals upon guiding.

An application of the radio frequency network according to the present disclosure may be to distribute the first electromagnetic energy and the second electromagnetic energy to antenna elements of an antenna device. For example, the first output port may be coupled to a first antenna element, the second output port may be coupled to a second antenna element and the third output port may be coupled to a third antenna element.

The first output port may be coupled to the first antenna element via the first output guide. Additionally or alternatively, the second output port may be coupled to the second antenna element via the second output guide. Additionally or alternatively, the third output port may be coupled to the third antenna element via the third output guide.

With some embodiments, the third antenna element may be directly coupled to the third output port so that the third antenna element is located directly at the third output port. For example, the third antenna element may be formed by the third output port. This allows for efficient coupling of the second electromagnetic energy to the third antenna element.

Furthermore, a position of the third antenna element with respect to the third output port may be adapted to couple only a portion of the first input electromagnetic energy and/or only a portion of the second input electromagnetic energy into the third output port upon passing the third output port from the input port towards the first filter port. For example, the position of the third antenna element with respect to the third output port may be adapted to pass a portion of the second input electromagnetic energy through the third output port and the third antenna element upon traveling from the input port towards the first filter port and to pass a further portion of the second input electromagnetic energy to the first filter port.

Likewise, the second antenna element may be directly coupled to the second output port so that the second antenna element is located directly at the second output port. For example, the second antenna element may be formed by the second output port. Additionally or alternatively, the first antenna element may be directly coupled to the first output port so that the first antenna element is located directly at the first output port. For example, the first antenna element may be formed by the first output port.

Each one of the first antenna element, the second antenna element and the third antenna element may form a radiator, such as a radiating slot, a radiating patch or a horn antenna.

According to an embodiment of the radio frequency network, the first frequency band and the second frequency band lie between 30 kHz and 3 THz, such as between 30 kHz and 300 GHz or between 3 MHz and 300 GHz.

A lowest frequency of the first frequency band and a lowest frequency of the second frequency band may be at least 10 MHz, such as at least 100 MHz, at least 1 GHz, at least 10 GHz, at least 20 GHz, at least 50 GHz or at least 70 GHz. A highest frequency of the first frequency band and a highest frequency of the second frequency band may be at most 300 GHz, such as at most 200 GHz, at most 150 GHz, at most 100 GHz or at most 90 GHz.

The lowest frequency of the first frequency band may be at least 72 GHz, at least 74 GHz or at least 76 GHz. The highest frequency of the first frequency band may be at most 79 GHz, at most 78 GHz or at most 77 GHz. For example, the first frequency band may lie in between 76 GHz and 77 G Hz. The first frequency may, for example, be 76.5 GHz.

The lowest frequency of the second frequency band may be at least 77 GHz, at least 78 GHz or at least 79 GHz. The highest frequency of the second frequency band may be at most 85 GHz, at most 83 GHz, at most 82 GHz or at most 81 GHz. For example, the second frequency band may lie in between 79 GHz and 81 GHz. The second frequency may, for example, be 80 GHz.

The first frequency band may span at least 300 MHz, such as at least 500 MHz, at least 750 MHz or at least 1 GHz. Additionally or alternatively, the second frequency band may span at least 300 MHz, such as at least 500 MHz, at least 750 MHz or at least 1 GHz.

According to an embodiment, the radio frequency network is configured as a microwave network. Such a radio frequency network is especially suited for radar applications. With a microwave network, the first frequency band and the second frequency band lie between 300 MHz and 300 GHz.

According to an embodiment of the radio frequency network, the first frequency is different from the second frequency. For example, the first frequency band may be different from the second frequency band. The first frequency band may be separated from the second frequency band by a bandgap.

The difference between the first frequency and the second frequency may be at least 1 GHz, such as at least 2 GHz, or at least 3 GHz. The bandgap may be at least 0.5 GHz, such as at least 1 GHz or at least 2 GHz.

In general, the radio frequency network may be configured as a transmission line network that routes the first electromagnetic energy and the second electromagnetic energy between the input port and the output ports by transmission lines that comprise at least two conductors that are isolated from each other.

According to an embodiment, the radio frequency network is configured as a waveguide network, such as an air-filled waveguide network. Compared to a transmission line network, such a waveguide network provides reduced losses and improved power handling capability.

According to an embodiment of the radio frequency network, the radio frequency network is bounded by a single hollow conductor. The single hollow conductor may form the waveguide network by surrounding the waveguides of the waveguide network. The single hollow conductor may comprise openings, for example at the input port and/or the output ports. For example, it may comprise individual openings for each one of the input port, the first output port, the second output port and the third output port.

According to an embodiment of the radio frequency network, waveguides of the radio frequency network have a rectangular cross section perpendicular to their propagation direction. Such waveguides provide well-defined propagation modes and facilitate design of the radio frequency network.

According to an embodiment of the radio frequency network, the first portion equals the second portion. This distributes the first electromagnetic energy equally between the second filter port and the third filter port. With other embodiments, the first portion may be different from the second portion.

According to an embodiment of the radio frequency network, at least two, such as all, of a propagation direction through the input port, a propagation direction through the first output port and a propagation direction through the second output port are parallel to a propagation plane and a propagation direction through the third output port has an angle with respect to the propagation plane. This allows for a compact construction of the radio frequency network and/or a device comprising the radio frequency network since components connected to the third output port, such as the third output guide or the third antenna element, do not have to occupy the propagation plane.

As an example, the propagation direction through the third output port may be perpendicular to the propagation plane. This further reduces the space requirements of the radio frequency network compared to more oblique angles.

According to an embodiment of the radio frequency network, a propagation direction through the first filter port is perpendicular to a propagation direction through the second filter port and/or a propagation direction through the third filter port. Such a construction of the multiport filter provides a large spacing of the filter ports and thus facilitates connection of further network elements to the ports.

According to an embodiment of the radio frequency network, the second filter port and the third filter port are located opposite from each other. This maximizes separation of the second filter port and the third filter port and therefore facilitates connection of further network elements to these ports.

According to an embodiment, the multiport filter is configured as a single radio frequency component that forms a combined power divider and frequency filter. Thereby, the combined power divider and frequency filter may be exemplarily configured to pass the first electromagnetic energy having the first frequency and to split the first electromagnetic energy into the first portion and into the second portion and configured to block the second electromagnetic energy having the second frequency. As an integrated component, the multiport filter provides both a power splitting function and a frequency filtering function.

According to an embodiment of the radio frequency network, the multiport filter comprises a cavity bounded by a single hollow conductor. Such a single-cavity multiport filter has a small form factor.

For example, the single radio frequency component may be configured as the cavity.

The cavity may form a resonating volume of the resonator. For example, the cavity may form the frequency filter and, optionally, the further frequency filter. For example, a filter section of the cavity may form the frequency filter, such as the resonating cavity of the frequency filter, and, optionally, a further filter section of the cavity may form the further frequency filter, such as the resonating cavity of the further frequency filter.

The cavity may also form the integrated power splitter. Thereby, a splitter section of the cavity may form the integrated power splitter.

According to an embodiment of the radio frequency network, the multiport filter comprises the cavity bounded by a single hollow conductor, wherein the first filter port is configured as a first waveguide opening in a first sidewall of the cavity, the second filter port is configured as a second waveguide opening in a second sidewall of the cavity and the third filter port is configured as a third waveguide opening in a third sidewall of the cavity. Providing the individual ports as waveguide openings allows for low-loss coupling of electromagnetic energy through the ports and at the same time minimize the space requirements for the individual ports.

The cavity may be completely closed except for the openings for the first filter port, the second filter port and the third filter port.

The cavity may be configured as an empty cavity. For example, the cavity may be void of any internal structures surrounded by the sidewalls, such as posts or the like.

The cavity may be simply connected. With a simply connected cavity, any two-dimensional loop within the cavity is continuously contractable to a single point.

In general, at least the resonating cavity of the frequency filter may be simply connected and/or at least the resonating cavity of the further frequency filter may be simply connected.

According to an embodiment of the radio frequency network, the cavity is bounded by a top plate and a bottom plate, wherein the top plate and the bottom plate are oriented parallel to each other and wherein each of the first sidewall, the second sidewall and the third sidewall connect the top plate and the bottom plate with each other. Such top and bottom plates allow for simple installation of the radio frequency network, for example in a vehicle. Furthermore, they allow for efficient thermal coupling to dissipate heat from the multiport filter.

According to an embodiment of the radio frequency network, the first sidewall, the second sidewall and the third sidewall are orientated perpendicular to the top plate and the bottom plate. This provides a well-defined mode volume within the multiport filter and facilitates design of the filter properties. Furthermore, it allows for simple manufacture of the multiport filter.

According to an embodiment of the radio frequency network, the cavity is symmetric with respect to a symmetry plane, the symmetry plane being parallel to a propagation direction through the first filter port and centered at the first filter port in a direction perpendicular to the propagation direction through the first filter port. The second filter port and the third filter port thereby are located at opposite sides of the symmetry plane. Such a design provides for equal splitting of the first electromagnetic energy in between the second filter port and the third filter port. The symmetry plane may, for example, be perpendicular to the propagation plane.

According to an embodiment of the radio frequency network, the cavity forms a distribution protrusion located on a fourth sidewall of the cavity, wherein the distribution protrusion is located opposite the first filter port. The distribution protrusion may be adapted to define a ratio of the first portion and the second portion. For example, the dimensions of the distribution protrusion, such as a width and/or a depth of the distribution protrusion, may be adapted to define the ratio of the first portion and the second portion. Additionally or alternatively, the distribution protrusion may be adapted to match an impedance at the first filter port, for example to match and impedance of the multiport filter to the further intermediate guide connecting at the first filter port.

The distribution protrusion may protrude into the cavity of the multiport filter. For example, the distribution protrusion may be located within the splitter section of the cavity.

The fourth sidewall may be located opposite the first sidewall comprising the first filter port. For example, the fourth sidewall may be parallel to the first sidewall.

According to an embodiment of the radio frequency network, the distribution protrusion is centered with respect to the first filter port. This contributes to an equal splitting ratio of the first portion and the second portion.

According to an embodiment of the radio frequency network, the distribution protrusion has a width parallel to the fourth sidewall and a depth perpendicular to the fourth sidewall of the cavity, wherein the width is larger than the depth. For example, the width may be at least 2.5 times the depth. Additionally or alternatively, the width may be at most 3 times the depth. For example, the width may be 2.7 times the depth.

According to an embodiment of the radio frequency network, the cavity comprises a filter section forming a resonator for the first electromagnetic energy, wherein the resonator is coupled in between the first filter port and the second filter port. The resonator may form a filter element of the multiport filter. Such a filter element that is configured as a resonator provides a steep frequency response.

The cavity may comprise a further filter section forming a further resonator for the first electromagnetic energy that is coupled in between the first filter port and the third filter port. The further resonator may form a further filter element of the multiport filter.

According to an embodiment of the radio frequency network, the resonator comprises a matching protrusion on a sidewall of the resonator. Dimensions of the matching protrusion, such as a depth and/or a width of the matching protrusion, may be adapted to match the impedance of the resonator to the impedance of the first filter port and/or the impedance of the second filter port. The matching protrusion may protrude into the cavity of the multiport filter.

The further resonator may comprise a further matching protrusion on a sidewall of the further resonator. The sidewall of the further resonator may be the sidewall of the cavity comprising the matching protrusion of the resonator.

According to an embodiment of the radio frequency network, the sidewall of the resonator is formed by the first sidewall comprising the first filter port. The first filter port and the matching protrusion may be located at the same side of the cavity. This allows to place the matching protrusion on a sidewall opposite the fourth sidewall comprising the distribution protrusion. Providing both a matching protrusion and a distribution protrusion provides several degrees of freedom to tune the splitting ratio between the second filter port and the third filter port and to simultaneously achieve impedance matching.

Likewise, the sidewall of the further resonator may be formed by the first sidewall comprising the first filter port.

According to an embodiment of the radio frequency network, the matching protrusion is located opposite a sidewall section of a further sidewall of the resonator, wherein the sidewall section is flat over at least the entire width of the matching protrusion. This provides a well-defined mode volume of the cavity and the resonator and facilitates design of the filtering and distribution properties of the cavity and the resonator.

Likewise, the further matching protrusion may be located opposite a sidewall section of a further sidewall of the further resonator, wherein the sidewall section of the further sidewall of the further resonator is flat over at least the entire width of the further matching protrusion.

According to an embodiment, the further sidewall of the resonator is the fourth sidewall of the cavity. Likewise, the further sidewall of the further resonator may be the fourth sidewall of the cavity.

According to an embodiment of the radio frequency network, the first filter port is spaced apart from the matching protrusion. The matching protrusion then may form a separate feature of the first sidewall.

Likewise, the first filter port may be spaced apart from the further matching protrusion.

According to an embodiment of the radio frequency network, the matching protrusion has a width parallel to the sidewall of the resonator and a depth perpendicular to the sidewall of the resonator, wherein the width is larger than the depth. For example, the width may be at least 2.5 times the depth. Additionally or alternatively, the width may be at most 3 times the depth. For example, the width may be 2.7 times the depth.

Likewise, the further matching protrusion may have a width parallel to the sidewall of the further resonator and a depth perpendicular to the sidewall of the further resonator, wherein the width is larger than the depth. For example, the width may be at least 2.5 times the depth. Additionally or alternatively, the width may be at most 3 times the depth. For example, the width may be 2.7 times the depth.

According to an embodiment of the radio frequency network, the second filter port is connected to the cavity by a port taper that continuously narrows the cavity towards the second filter port. Such a port taper contributes to impedance matching between the multiport filter and the second filter port. Dimensions of the port taper, such as a length and/or a curvature of the port taper, may be adapted to match the impedance at the second filter port, for example to the impedance of the first output guide.

Likewise, the third filter port may be connected to the cavity by a further port taper that continuously narrows the cavity towards the third filter port.

According to an embodiment of the radio frequency network, sidewalls of the port taper follow continuous smooth curves. This minimizes reflections within the multiport filter and enhances impedance matching at the second filter port. A smooth curve according to the present disclosure is at least once differentiable with a continuous derivative. The sidewalls of the ports taper may follow their respective continuous smooth curves for example in a plane perpendicular to the respective sidewall. The plane may be parallel to the propagation direction at the second filter port. The plane may, for example, be parallel to the propagation plane or it may be the propagation plane.

Likewise, sidewalls of the further port taper may follow continuous smooth curves, for example in a plane perpendicular to the respective sidewall. The plane may be parallel to the propagation direction at the third filter port. The plane may, for example, be parallel to the propagation plane or it may be the propagation plane

According to an embodiment of the radio frequency network, the port taper is spaced apart from the matching protrusion. This allows to independently tune the matching protrusion and the port taper and thus provides a large number of degrees of freedom for impedance matching and filter tuning.

Likewise, the further port taper may be spaced apart from the further matching protrusion.

According to an embodiment, the radio frequency network is configured to receive first input electromagnetic energy having the first frequency within the first frequency band at the input port, wherein the radio frequency network is configured to pass a portion of the first input electromagnetic energy to the third output port and to pass a further portion of the first input electromagnetic energy as the first electromagnetic energy to the first filter port. This provides a versatile radio frequency network that operates the third output port at both the first and second frequency and frequency-selectively activates the first and second output port only at the second frequency.

With other embodiments, the radio frequency network may be configured to isolate the third output port from the first input electromagnetic energy.

The first input electromagnetic energy may cover the entire first frequency band. This means that all properties of the radio frequency network described for the first frequency equally holds for first input electromagnetic energy at all frequencies within the entire first frequency band.

According to an embodiment, the radio frequency network is configured to receive second input electromagnetic energy having the second frequency within the second frequency band at the input port, wherein the radio frequency network is configured to guide at least a portion of the second input electromagnetic energy as the second electromagnetic energy to the first filter port and wherein the radio frequency network is configured for constructive interference of the second electromagnetic energy reflected at the first filter port and the incoming second input electromagnetic energy at the third output port. This efficiently couples the entire second input electromagnetic energy into the third output port.

The second input electromagnetic energy may cover the entire second frequency band. This means that all properties of the radio frequency network described for the second frequency equally holds for second input electromagnetic energy at all frequencies within the entire second frequency band.

According to an embodiment of the radio frequency network, the third output port is coupled in between the input port and the first filter port via a power splitter having a first splitter port, a second splitter port and a third splitter port, wherein the first splitter port couples the power splitter to the input port, the second splitter port couples the power splitter to the first filter port and the third splitter port couples the power splitter to the third output port.

Dimensions of the power splitter may be adapted to define a splitting ratio between the first filter port and the third output port for the first input electromagnetic energy and/or the second input electromagnetic energy. Furthermore, the dimensions of the power splitter may be adapted for constructive interference of the second electromagnetic energy with the incoming second input electromagnetic energy at the third splitter port.

According to an embodiment of the radio frequency network, the power splitter is configured to receive the first input electromagnetic energy having the first frequency within the first frequency band from the input port, to pass a portion of the first input electromagnetic energy to the third splitter port and to the third output port and to pass a further portion of the first input electromagnetic energy as the first electromagnetic energy to the first filter port. This allows to operate the third output port both at the second frequency or over the entire second frequency band and at the first frequency or over the entire first frequency band.

The portion of the first input electromagnetic energy passed to the third splitter port and to the third output port may cover the entire first frequency band and/or the portion of the first input electromagnetic energy passed to the first filter port may cover the entire first frequency band.

According to an embodiment of the radio frequency network, the first splitter port is formed by a first opening in a first sidewall of the power splitter and the second splitter port is formed by a second opening in a second sidewall of the power splitter, wherein the first sidewall is spaced apart from the second sidewall parallel to a longitudinal axis and wherein the second opening is shifted with respect to the first opening parallel to a transverse axis, the transverse axis being perpendicular to the longitudinal axis. Shifting the second opening with respect to the first opening redirects the electromagnetic energy traveling from the first splitter port to the second splitter port along the transverse axis and allows to tune the electromagnetic field within the power splitter and/or the coupling ratio between the first splitter port and the second splitter port by adapting a distance of the shifting.

Shifting the first opening with respect to the second opening also contributes to orientating an electric field of electromagnetic energy entering the power splitter through the first opening parallel to an electric field of electromagnetic energy entering the power splitter through the second opening, for example of the electromagnetic energy reflected at the first filter port connected to the second opening. Orientating the electric field parallel to each other allows the electromagnetic energy entering through the first opening and the electromagnetic energy entering through the second opening to constructively interfere within the power splitter and to therefore efficiently couple the electromagnetic energy through the third filter port.

The first sidewall may be orientated parallel to the second sidewall. The first sidewall and/or the second sidewall may be configured as flat surfaces. The first sidewall may be located opposite the second sidewall.

The first and second sidewalls may have a width parallel to the transverse axis that is larger than a spacing of the first sidewall from the second sidewall.

A propagation direction through the first opening may be parallel to a propagation direction through the second opening.

The third splitter port may be formed by a third opening of the power splitter. A propagation direction through the third opening may be angled with respect to a propagation direction through the first opening and/or with respect to a propagation direction through the second opening. For example, the propagation direction through the third opening may be perpendicular to the propagation direction through the first opening and/or to the propagation direction through the second opening.

The third splitter port may be configured as an antenna element, such as a radiating slot, a radiating patch or a radiating horn. This allows to directly transduce the electromagnetic energy passing through the third splitter port between the waveguide network and a radiation field in a compact set up and with low losses.

The power splitter may comprise a cavity and the first sidewall and the second sidewall each may form sidewalls of the cavity. For example, the cavity may be configured as a rectangular cavity. The first sidewall and the second sidewall may form opposite sidewalls of the cavity.

The third opening of the third splitter port may form an opening within the cavity. The third opening thereby may be orientated perpendicular to the first sidewall and the second sidewall. The third opening may extend from the first sidewall to the second sidewall. For example, the third opening may cover the entire cavity in a plane perpendicular to the propagation direction through the third splitter port.

With an embodiment, the cavity may be formed by an end section of a rectangular waveguide and the third opening of the third splitter port may extend over a plane perpendicular to a propagation direction within the rectangular waveguide and perpendicular to the propagation direction through the third splitter port. The propagation direction within the rectangular waveguide and the propagation direction through the third splitter port may be parallel to a longitudinal direction of the rectangular waveguide. The first sidewall with the first opening of the first splitter port and the second sidewall with the second opening of the second splitter port may form opposite sidewalls of the rectangular waveguide.

According to an embodiment of the radio frequency network, a center of the first opening and a center of the second opening are located on diametrically opposite halves of the first and second sidewall of the power splitter parallel to the transverse axis. This provides for a large shift of the first and second opening with respect to each other and therefore efficiently redirects the electromagnetic energy traveling from the first opening to the second opening or vice versa.

According to an embodiment of the radio frequency network, the first opening is located at an end of the first sidewall of the power splitter and the second opening is located at an end of the second sidewall of the power splitter that is diametrically opposite from the end of the first sidewall in a direction parallel to the transverse axis. This directs the electromagnetic energy traveling between the first and second opening along the entire length of the power splitter and the transverse axis. For a power splitter comprising a cavity, the electromagnetic energy is then efficiently coupled to the cavity.

According to an embodiment of the radio frequency network, the first opening connects to the input port via a first waveguide and the second opening connects to the first filter port via a second waveguide. Such waveguides provide for efficient coupling of electromagnetic energy into and out of the power splitter.

According to an embodiment of the radio frequency network, a sidewall of the first waveguide is flush with a sidewall of the power splitter along the longitudinal axis perpendicular to the transverse axis. This minimizes losses upon coupling the electromagnetic energy between the power splitter and the first waveguide.

The sidewall of the power splitter may delimit the cavity of the power splitter perpendicular to the transverse axis. The sidewall of the power splitter may be orientated perpendicular to the transverse axis. It may be located opposite a sidewall that neighbors the second opening of the second splitter port. Furthermore, the sidewall of the first waveguide may be orientated perpendicular to the transverse axis.

According to an embodiment of the radio frequency network, all sidewalls delimiting the second waveguide perpendicular to the transverse axis are shifted with respect to respective neighboring ends of the second sidewall. This allows to tune a coupling ratio between the second waveguide and the power splitter by adapting a distance between the second waveguide and the nearest end of the second sidewall. At that end of the second sidewall, the power splitter may be delimited by a sidewall that is orientated perpendicular to the transverse axis.

According to an embodiment of the radio frequency network, at least one sidewall of the second waveguide, such as both sidewalls of the second waveguide, is connected to the second sidewall of the power splitter by a taper that widens towards the second sidewall.

According to an embodiment of the radio frequency network, at least one sidewall of the first waveguide is connected to the first sidewall of the power splitter by a taper that widens towards the first sidewall.

Such tapers allow for impedance matching and for tuning the coupling ratio between the second waveguide and the power splitter. Furthermore, tapers allow for tuning the orientation of the electromagnetic field within the power splitter and thus also the coupling of the electromagnetic energy to the remaining splitter ports.

According to an embodiment of the radio frequency network, the first sidewall of the power splitter and the second sidewall of the power splitter form sidewalls of the cavity of the power splitter.

The cavity may have a height in a height direction perpendicular to the transverse axis and perpendicular to the longitudinal axis that is larger than a height of the first waveguide and/or a height of the second waveguide in the height direction. This provides for propagation of electromagnetic energy along the height direction. For example, the third splitter port may be located at an end of the cavity in the height direction, for example, the third splitter port may close the cavity in the height direction.

According to an embodiment, the phase delay section is adapted for constructive interference of the second electromagnetic energy reflected from the first filter port with electromagnetic energy within the second frequency band passing the third output port from the input port towards the first filter port.

According to an embodiment of the radio frequency network, the radio frequency network comprises a phase delay section coupled in between the third output port and the multiport filter, wherein the phase delay section comprises a first section end coupling the phase delay section to the third output port and a second section end coupling the phase delay section to the first filter port. A length of the phase delay section thereby is adapted to transfer the second electromagnetic energy reflected from the first filter port to the third output port in phase with electromagnetic energy within the second frequency band passing the third output port from the input port towards the first filter port. Such a phase delay section may provide for a constructive interference of the second electromagnetic energy at the third output port and therefore for efficient coupling of the second electromagnetic energy into the third output port.

The phase delay section may be configured as a meandering structure, such as a meandering waveguide.

According to an embodiment of the radio frequency network, the phase delay section comprises a curve that deflects a propagation direction in the phase delay section from a propagation direction at the first section end and/or from a propagation direction at the second section end.

According to an embodiment of the radio frequency network, the curve is part of the meandering structure, such as the meandering waveguide, and comprises a further curve having a curvature opposite a curvature of the curve.

A curved layout of the phase delay section takes up little space and provides a compact construction of the radio frequency network.

According to an embodiment of the radio frequency network, the propagation direction at the first section end is parallel to the propagation direction at the second section end. This facilitates placing the phase delay section in between the third output port and the multiport filter, such as in between the power splitter and the multiport filter. Such a layout consumes little space.

In a second aspect, the present disclosure is directed at a multiport filter that comprises a first filter port, a second filter port and a third filter port, wherein the multiport filter is configured to receive, at the first filter port, first electromagnetic energy having a first frequency within a first frequency band and second electromagnetic energy having a second frequency within a second frequency band, wherein the multiport filter is configured to pass a first portion of the first electromagnetic energy from the first filter port to the second filter port and to pass a second portion of the first electromagnetic energy from the first filter port to the third filter port, and wherein the multiport filter is configured to reflect the second electromagnetic energy from the first filter port back into the first filter port.

The multiport filter may be the multiport filter of the radio frequency network according to the first aspect of the present disclosure. Therefore, all embodiments and technical effects that are disclosed in connection with the multiport filter of the radio frequency network according to the first aspect of the present disclosure also apply to the multiport filter according to the second aspect of the present disclosure and vice versa.

In a third aspect, the present disclosure is directed at an antenna device for road vehicle applications comprising the radio frequency network according to the present disclosure, a first antenna element, a second antenna element, and a third antenna element, wherein the first antenna element is coupled to the first output port, the second antenna element is coupled to the second output port and the third antenna element is coupled to the third output port. Implementing the radio frequency network according to the present disclosure in an antenna device provides a compact antenna device and allows for frequency-selective routing of electromagnetic energy to the individual antenna elements.

The antenna elements constitute individual radiators of the antenna device. They may, for example, be configured as slot antenna elements, patch antenna elements or horn antenna elements.

In a fourth aspect, the present disclosure is directed at a radar device for road vehicle applications comprising the radio frequency network according to the present disclosure.

In a fifth aspect, the present disclosure is directed at a road vehicle comprising the radio frequency network according to the present disclosure.

With all aspects of the present disclosure, the vehicle may be an automotive vehicle.

### DRAWINGS

Exemplary embodiments and functions of the present disclosure are described herein in conjunction with the following drawings, showing schematically:
- Fig. 1: a schematic view of an antenna device with a radio frequency network according to the present disclosure;
- Fig. 2: a top sectional view of the radio frequency network cut along a propagation plane;
- Fig. 3: a perspective top view of the radio frequency network with the propagation plane;
- Fig. 4: a top sectional view of a multiport filter of the radio frequency network cut along the propagation plane;
- Fig. 5: a top sectional view of a power splitter of the radio frequency network cut along the propagation plane;
- Fig. 6: a perspective top view of the power splitter;
- Fig. 7: a top sectional view of a phase delay section of the radio frequency network cut along the propagation plane;
- Fig. 8: frequency responses of the multiport filter according to the present disclosure;
- Fig. 9: frequency responses of the radio frequency network according to the present disclosure;
- Fig. 10: a road vehicle comprising the antenna device with the radio frequency network according to the present disclosure.

### DETAILED DESCRIPTION

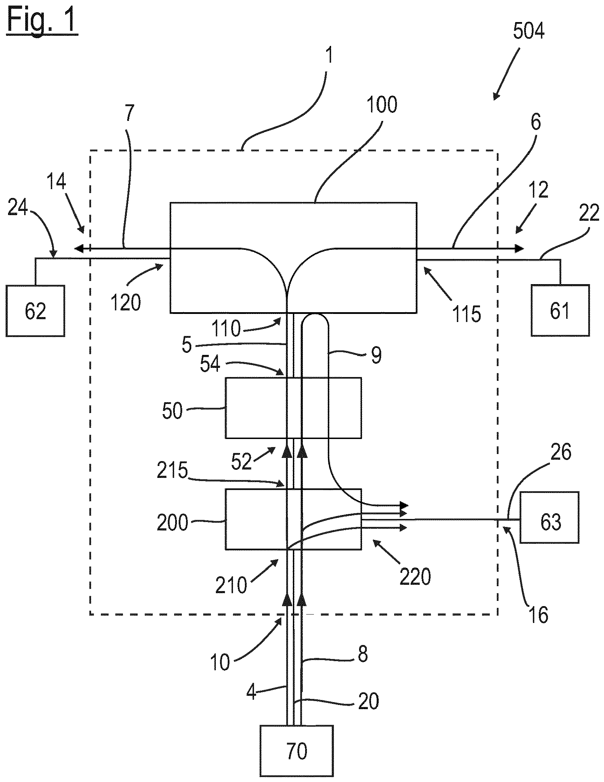

Fig. 1 shows a schematic view of an antenna device 504 comprising a radio frequency network 1 according to the present disclosure. The radio frequency network 1 comprises an input port 10, a first output port 12, a second output port 14 and a third output port 16.

While Fig. 1 exemplarily shows the radio frequency network 1 according to the present disclosure implemented in the antenna device 504, the radio frequency network 1 may also be implemented in any other radio frequency device.

The input port 10 is connectable to a radar circuit 70, which is shown in Fig. 1 connected to the input port 10. Furthermore, the first output port 12 is connectable to a first antenna element 61, the second output port 14 is connectable to a second antenna element 62 and the third output port 16 is connectable to a third antenna element 63. Fig. 1 shows the first antenna element 61 connected to the first output port, the second antenna element 62 connected to the second output port 14 and the third antenna element 63 connected to the third output port 16.

The input port 10 is connected to an input guide 20 that exemplary connects the radio frequency network 1 to the radar circuit 70. The first output port 12 connects the radio frequency network 1 to a first output guide 22 that exemplary connects the radio frequency network 1 to the first antenna element 61, the second output port 14 connects the radio frequency network 1 to a second output guide 24 that exemplary connects the radio frequency network 1 to the second antenna element 62, and the third output port 16 connects the radio frequency network 1 to a third output guide 26 that exemplary connects the radio frequency network 1 to the third antenna element 63.

The radio frequency network 1 furthermore comprises a multiport filter 100, a power splitter 200 and a phase delay section 50. The multiport filter 100 is configured as a single radio frequency component that integrates a combined power divider and frequency filter. As such, the multiport filter 100 provides both a power splitting function and a frequency filtering function. The multiport filter 100 forms a power divider or splitter with frequency filtering capability.

The multiport filter 100 has a first filter port 110, a second filter port 115 and a third filter port 120. The first filter port 110 couples the multiport filter 100 to the input port 10 via the power splitter 200 and the phase delay section 50. The second filter port 115 couples the multiport filter 100 to the first output port 12 and the third filter port 120 couples the multiport filter 100 to the third output port 14.

The third output port 16 is coupled in between the input port 10 and the first filter port 110 via the power splitter 200. The power splitter 200 thereby comprises a first splitter port 210 that couples the power splitter 200 to the input port 10, a second splitter port 215 that couples the power splitter 200 to the first filter port 110, and a third splitter port 220 that couples the power splitter 200 to the third output port 16.

The phase delay section 50 is coupled in between the power splitter 200 and the multiport filter 100 and comprises a first section end 52 and a second section end 54. The first section end 52 couples the phase delay section 50 to the power splitter 200 via the second splitter port 215 and the second section end 54 couples the phase delay section 50 to the multiport filter 100 via the first filter port 110. The phase delay section 50 forms an intermediate guide that couples the third output port 16 to the multiport filter 100.

The radar frequency network 1 is configured to receive a first input electromagnetic energy 4 and second input electromagnetic energy 8 at the input port 10 from the radar circuit 70. The first and second input electromagnetic energy 4, 8 may constitute radar signals generated by the radar circuit 70. The first input electromagnetic energy 4 has a first frequency within a first frequency band and the second input electromagnetic energy 8 has a second frequency within a second frequency band.

The power splitter 200 receives the first and second input electromagnetic energy 4, 8 from the input ports 10 via the first splitter port 210. For all frequencies within the first frequency band, the power splitter 200 directs a portion of the first input electromagnetic energy 4 to the second splitter port 215 and a further portion of the first input of electromagnetic energy 4 to the third splitter port 220. With alternative embodiments, the power splitter 200 may direct the first input electromagnetic energy 4 entirely to the second splitter port 115.

Furthermore, for all frequencies within the second frequency band, the power splitter 200 directs a portion of the second input electromagnetic energy 8 to the second splitter port 215 and a further portion of the second input electromagnetic energy 8 to the third splitter port 220.

The portion of the first input electromagnetic energy 4 directed at the second splitter port 215 and the portion of the second input electromagnetic energy 8 directed at the second splitter port 215 travel from the first section end 52 through the phase delay section 50 to the second section end 54. The portion of the first input electromagnetic energy 4 then reaches the first filter port 110 as first electromagnetic energy 5 and the portion of the second input electromagnetic energy 8 reaches the first filter port 110 as second electromagnetic energy 9.

For all frequencies within the first frequency band, the multiport filter 100 divides the first electromagnetic energy 5 into a first portion 6 that is directed to the second filter port 115 and a second portion 7 that is directed to the third filter port 120. Furthermore, for all frequencies within the second frequency band, the multiport filter 100 reflects the second electromagnetic energy 9 at the first filter port 110. With some embodiments, the second electromagnetic energy 9 may thereby enter at least partially the multiport filter 100 but is prevented from exiting through the second filter port 115 and the third filter port 120.

After reflection at the first filter port 110, the second electromagnetic energy 9 travels back through the phase delay section 50 from the second section end 54 to the first section end 52 and enters the power splitter 200 through the second splitter port 115. At the power splitter 200, the reflected second electromagnetic energy 9 constructively interferes with the portion of the second input electromagnetic energy 8 directed to the third splitter port 220 and exits through the third splitter port 220 for all frequencies within the second frequency band.

In summary, the coupling of the portion of the second input electromagnetic energy 8 directly to the third splitter port 220 and the coupling of the reflected remaining portion of the second input electromagnetic energy 8 to the third splitter port 220 entirely couples the second input electromagnetic energy 8 entering the power splitter 200 at the first splitter port 210 to the third splitter port 220.

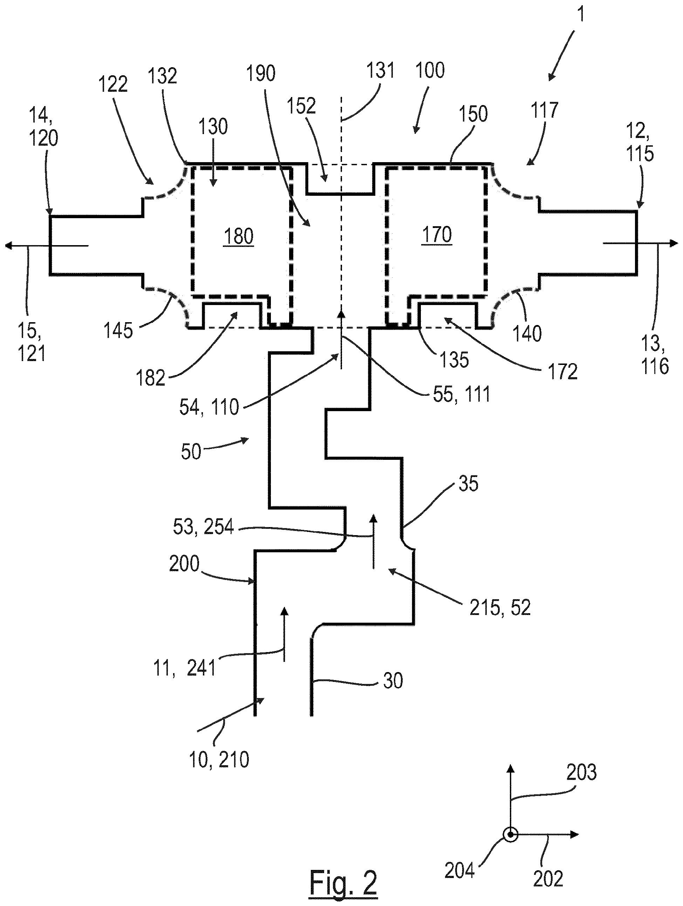

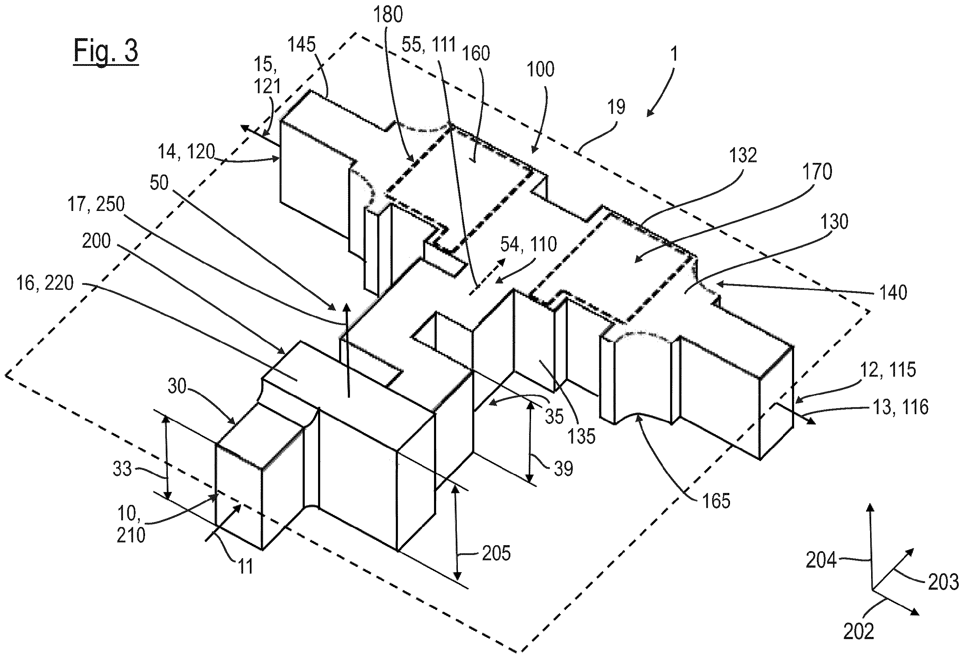

Fig. 2 shows a cross-sectional view of the radio frequency network 1 cut along the propagation plane 19 and Fig. 3 depicts a perspective top view of the radio frequency network 1 and the propagation plane 19.

The radio frequency network 1 is configured as a waveguide network. It is bounded by a single hollow conductor. With the exemplary embodiment, openings are only provided within the conductor at the input port 10 and the first, second and third output ports 12, 14, 16.

The waveguides of the waveguide network have a rectangular cross section perpendicular to their propagation direction. For example, a first waveguide 30 connected to the first splitter port 210 and a second waveguide 35 connected to the second splitter port 215 each have rectangular cross sections. Furthermore, waveguides connected to the first filter port 110, the second filter port 115 and the third filter port 120 each have rectangular cross sections. Furthermore, a waveguide connected to the third splitter port 220 also has a rectangular cross section. Finally, the phase delay section 50 is also configured as a rectangular waveguide.

With the exemplary embodiment, the second filter port 115 of the multiport filter 100 forms the first output port 12 and the third filter port 120 of the multiport filter 100 forms the second output port 14. Furthermore, the third splitter port 220 of the power splitter 200 forms the third output port 16.

A propagation direction 11 through the input port 10, a propagation direction 13 through the first output port 12 and a propagation direction 15 through the second output port 14 all are parallel to the propagation plane 19. Furthermore, a propagation direction 17 through the third output port 16 has an angle with the propagation plane 19. With the exemplary embodiment, the propagation direction 17 is perpendicular to the propagation plane 19.

Furthermore, a propagation direction 111 at the first filter port 110 of the multiport filter 100, a propagation direction 116 through the second filter port 115 and a propagation direction 121 through the third filter port 120 all are parallel to the propagation plane 19. The propagation direction 116 through the second filter port 115 and the propagation direction 121 through the third filter port 120 are antiparallel to each other. The propagation direction 111 through the first filter port 110 is perpendicular to both the propagation direction 116 through the second filter port 115 and the propagation direction 121 through the third filter port 120.

A propagation direction 241 through the first splitter port 210 and a propagation direction 254 through the second splitter port 115 are parallel to the propagation plane 19. Furthermore, the propagation direction 241 and the propagation direction 254 are parallel to each other. A propagation direction 250 through the third splitter port 220 has an angle with the propagation plane 19, exemplarily, it is perpendicular to the propagation plane 19.

With the phase delay section 50, a propagation direction 53 at the first section end 52 and a propagation direction 55 at the second section end 54 both are parallel to the propagation plane 19. In addition, a propagation direction along the entire phase delay section 50 is parallel to the propagation plane 19.

The power splitter 200, the phase delay section 50 and the multiport filter 100 adjoin each other in a direction parallel to the propagation plane 19.

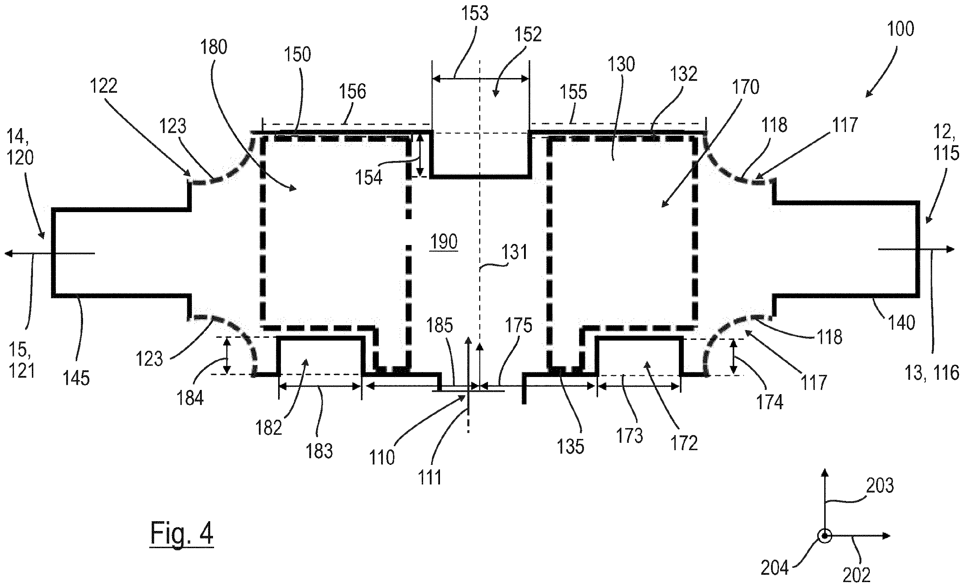

As can be seen from Fig. 3 in conjunction with Fig. 4, which depicts a cross-sectional view of the multiport filter 100 cut along the propagation plane 19, the multiport filter 100 comprises a single hollow cavity 130 that is bounded by a single conductor 132. The cavity 130 has a top plate 160 and a bottom plate 165 that are orientated parallel to each other and parallel to the propagation plane 19. The top plate 160 and the bottom plate 165 are connected to each other by a first sidewall 135, a second sidewall 140, a third sidewall 145 and a fourth sidewall 150. The first sidewall 135, the second sidewall 140, the third sidewall 145 and the fourth sidewall 150 are each orientated perpendicular to the top plate 160 and the bottom plate 165.

The first sidewall 135 is located opposite the fourth sidewall 150 and the second sidewall 140 is located opposite the third sidewall 145. The first sidewall 135 and the fourth sidewall 150 each extend in between the second sidewall 140 and the third sidewall 145.

The first filter port 110 is configured as an opening within the first sidewall 135. Opposite the first filter port 110, the cavity 130 In summary, the coupling of the portion of the second input electromagnetic energy 8 directly to the third splitter port 220 and the coupling of the reflected remaining portion of the second input electromagnetic energy 8 to the third splitter port 220 entirely couples the second input electromagnetic energy 8 entering the power splitter 200 at the first splitter port 210 to the third splitter port 220. 152 that extends from the fourth sidewall 150 into the cavity 130. With the exemplary embodiment, the distribution protrusion 152 is centered with respect to the first filter port 110. The distribution protrusion 152 has a depth 154 perpendicular to the fourth sidewall 150 and a width 153 along the fourth sidewall 150.

In between the first filter port 110 and the second filter port 115, the multiport filter 100 comprises a frequency filter that blocks the second frequency band and passes the first frequency band. The frequency filter is formed by a filter section of the cavity 130. The frequency filter is configured as a resonator 170 formed by the cavity 130 in between the first filter port 110 and the second filter port 115.

A section of the first sidewall 135 delimiting the resonator 170 comprises a matching protrusion 172 that protrudes from the first sidewall 135 into the cavity 130. The matching protrusion 172 has a depth 174 perpendicular to the first sidewall 135 and a width 173 along the first sidewall 135. The matching protrusion 172 is located opposite a sidewall section 155 of the fourth sidewall 150, whereby the sidewall section 155 is flat over the entire width of the matching protrusion 172.

The matching protrusion 172 is spaced apart from the first filter port 110 having a distance 175 from the center of the first filter port 110.

In between the first filter port 110 and the third filter port 120, the multiport filter 100 comprises a further frequency filter that blocks the second frequency band and passes the first frequency band. The further frequency filter is formed by a further filter section of the cavity 130. The further frequency filter is configured as a further resonator 180 formed by the cavity 130 in between the first filter port 110 and the third filter port 120.

A section of the first sidewall 135 delimiting the further resonator 180 comprises a further matching protrusion 182 that protrudes from the first sidewall 135 into the cavity 130. The further matching protrusion 182 has a depth 184 perpendicular to the first sidewall 135 and a width 183 along the first sidewall 135. The matching protrusion 172 is located opposite a further sidewall section 156 of the fourth sidewall 150, whereby the further sidewall section 156 is flat over the entire width of the further matching protrusion 182.

The further matching protrusion 182 is spaced apart from the first filter port 110 having a distance 185 from the center of the first filter port 110.

With the exemplary embodiment, the cavity 130 of the multiport filter 100 is symmetric with respect to a symmetry plane 131 that is perpendicular to the propagation plane 19 and parallel to the propagation direction 111 through the first filter port 110. Furthermore, the symmetry plane 131 is centered at the first filter port 110 and with respect to the matching protrusion 152.

The width 173 of the matching protrusion 172 equals the width 183 of the further matching protrusion 182 and the depth 174 of the matching protrusion 172 equals the depth 184 of the further matching protrusion 182. Furthermore, the distance 175 between the center of the first filter port 110 and the matching protrusion 172 equals the distance 185 between the center of the first filter port 110 and the further matching protrusion 182.

With other embodiments, the cavity 130 may also be asymmetric with respect to the plane 131. Such a cavity 130 may, for example, be adapted to provide an equal splitting ratio of the first electromagnetic energy 5 between the second filter port 115 and the third filter port 120.

Between the first filter port 110, the frequency filter and the further frequency filter, the cavity 130 comprises an integrated power splitter 190. The integrated power splitter 190 is formed by a splitter section of the cavity 130. It comprises the distribution protrusion 152.

At the second filter port 115, the cavity 130 comprises a port taper 117 that continuously narrows the cavity 130 towards the second filter port 115. Perpendicular to the propagation plane 19 and perpendicular to the top plate 160 and the bottom plate 165, the port taper 117 comprises two opposing sidewalls 118. Parallel to the propagation plane 19, the sidewalls 118 each follow continuous smooth curves. Furthermore, the sidewalls 118 are asymmetric with respect to each other.

At the third filter port 120, the cavity 130 comprises a further port taper 122 that continuously narrows the cavity 130 towards the third filter port 120. Perpendicular to the propagation plane 19, and perpendicular to the top plate 160 and the bottom plate 165, the further port taper 122 comprises two opposing sidewalls 123. Parallel to the propagation plane 19, the sidewalls 123 each follow continuous smooth curves. Furthermore, the sidewalls 123 are asymmetric with respect to each other.

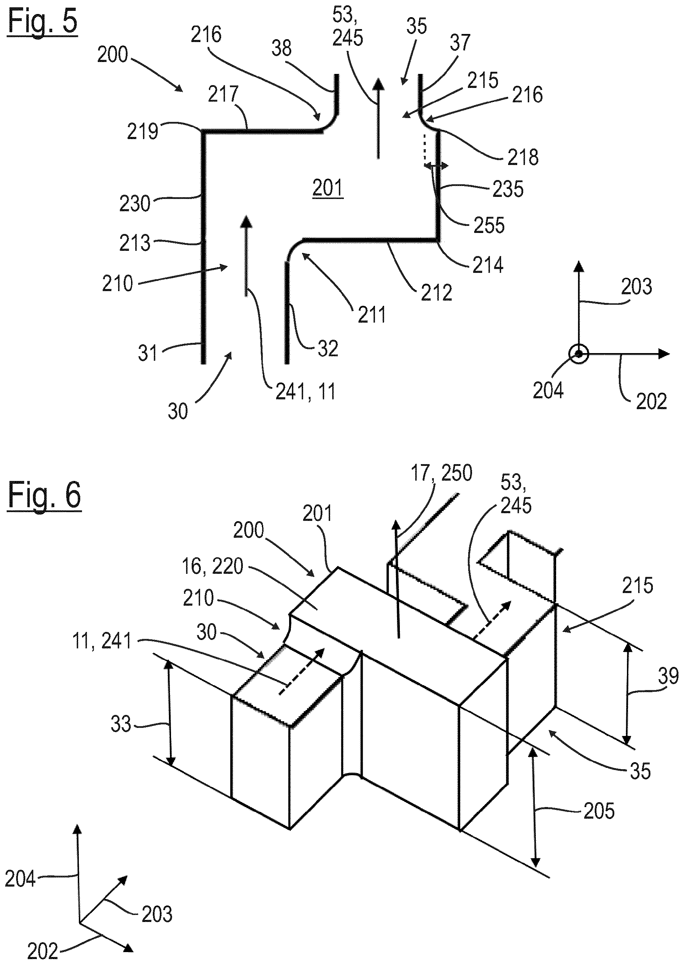

Fig. 5 shows a top sectional view of the power splitter 200 of the radio frequency network 1 cut along the propagation plane 19 and Fig. 6 shows a perspective top view of the power splitter 200.

The power splitter 200 comprises a cavity 201. Perpendicular to a longitudinal axis 203 that is parallel to the propagation direction 241 through the first splitter port 210 and to the propagation direction 245 through the second splitter port 215, the cavity 201 is delimited by a first sidewall 212 and a second sidewall 217. The first sidewall 212 and the second sidewall 217 are located opposite to each other and extend along a transverse axis 202 that is perpendicular to the longitudinal axis 203 and parallel to the propagation plane 19.

Perpendicular to the transverse axis 202, the cavity 201 is bounded by a third sidewall 230 and a fourth sidewall 235. The third sidewall 230 and the fourth sidewall 235 are located opposite each other. A distance between the third sidewall 230 and the fourth sidewall 235 is larger than a distance between the first sidewall 212 and the second sidewall 217.

The cavity 201 is configured as a rectangular cavity. Furthermore, the cavity 201 forms and end section of a rectangular waveguide that extends along a height direction 204 that is perpendicular to the transverse axis 202 and the longitudinal axis 203.

The first splitter port 210 is configured as an opening in the first sidewall 212 and the second splitter port 215 is configured as an opening in the second sidewall 217. Thereby, the opening of the first splitter port 210 is located at an end 213 of the first sidewall 212 parallel to the transverse axis 202 that is located diametrically opposite an end 218 of the second sidewall 217. The opening of the second splitter port 215 is located at the end 218 of the second sidewall 217.

The opening of the first splitter port 210 is located directly at the end 213 of the first sidewall 212. The opening of the second splitter port 115 is located at a distance 255 from the end 218 of the second sidewall 216.

Parallel to the transverse axis 202, the first sidewall 212 extends between the end 213 and a further end 214 of the first sidewall 212 and the second sidewall 217 extends between the end 218 and a further end 219 of the second sidewall 217. Parallel to the transverse axis 202, the end 213 of the first sidewall 212 is located opposite the further end 119 of the second sidewall 217 and the further end 214 of the first sidewall 212 is located opposite the end 218 of the second sidewall 217.

The first splitter port 210 connects to the first waveguide 30 and the second splitter port 115 connects to the second waveguide 35. A sidewall 31 of the first waveguide 30 is located at the end 213 of the first sidewall 212. The sidewall 31 of the first waveguide 30 is flush with the third sidewall 230 of the cavity 201. A further sidewall 32 of the first waveguide 30 that is located opposite the sidewall 31 parallel to the transverse axis 202 connects to the cavity 201 via a taper 211. The sidewall 31 and the further sidewall 32 are orientated perpendicular to the transverse axis 202.

A sidewall 37 of the second waveguide 35 and a further sidewall 38 of the second waveguide 35 that is located opposite the sidewall 37 each connect to the cavity 201 via a respective taper 216. The sidewall 37 and the further sidewall 38 are orientated perpendicular to the transverse axis 202. Thereby, the sidewall 37 has a distance 255 from the end 218 of the second sidewall 217 of the cavity 201.

As can be seen from Figures 3 and 6, the first waveguide 30 has a height 33 in the height direction 204 and the second waveguide 35 has a height 39 in the height direction 204, wherein the height 33 and the height 39 are equal. Furthermore, the cavity 201 of the power splitter 200 has a height 205 in the height direction 204 between a bottom sidewall and the third splitter port 220. Thereby, the height 205 of the cavity 201 is larger than the respective heights 33, 39 of the first and second waveguide 30, 35.

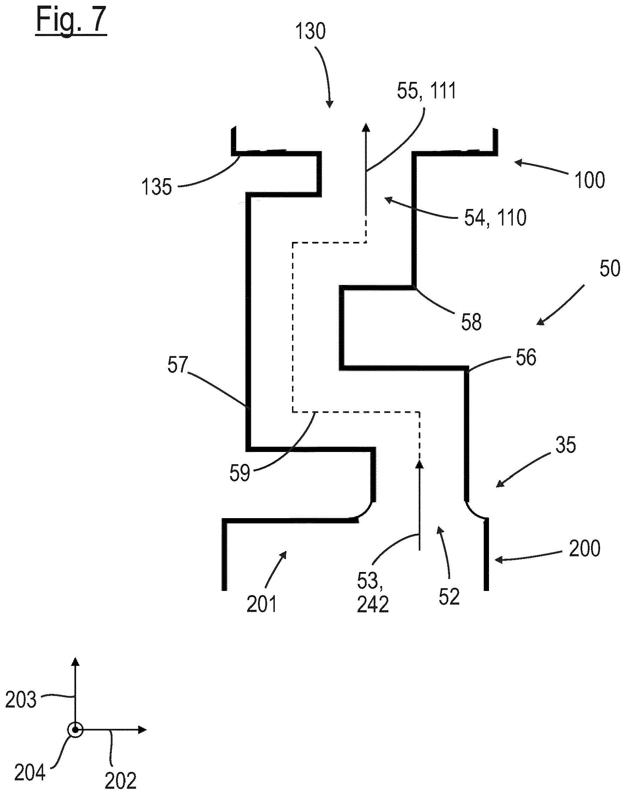

Fig. 7 shows a top sectional view of the phase delay section 50 cut along the propagation plane 19. At the first section end 52, the phase delay section 50 forms the second waveguide 35 connected to the second splitter port 215. At the second section end 54, the phase delay section 50 connects to the opening of the first filter port 110. A propagation direction 53 at the first section end 52 is parallel to the propagation plane 19 and a propagation direction 55 at the second section end 54 is also parallel to the propagation plane 19. Furthermore, the propagation directions 53, 55 are parallel to each other.

The phase delay section 50 forms a meandering structure in between the first section end 52 and the second section end 54. A propagation direction 59 parallel to the propagation plane 19 through the phase delay section 50 deviates from the propagation direction 53 at the first section end 52 and from the propagation direction 55 at the second section end 54. With the exemplary embodiment, the phase delay section 50 has a curve 56 that deflects the propagation direction 59 from the propagation direction 53 at the first section end 52. Following the curve 56, the phase delay section comprises a first further curve 57 that has a curvature opposite a curvature of the curve 56 parallel to the propagation plane 19 and a second further curve 58 that has a curvature opposite the curvature of the first further curve 57.

The first section end 52 directly connects to the second splitter port 215 of the power splitter 201 and the second section end 54 directly connects to the first filter port 110 of the multiport filter 100.

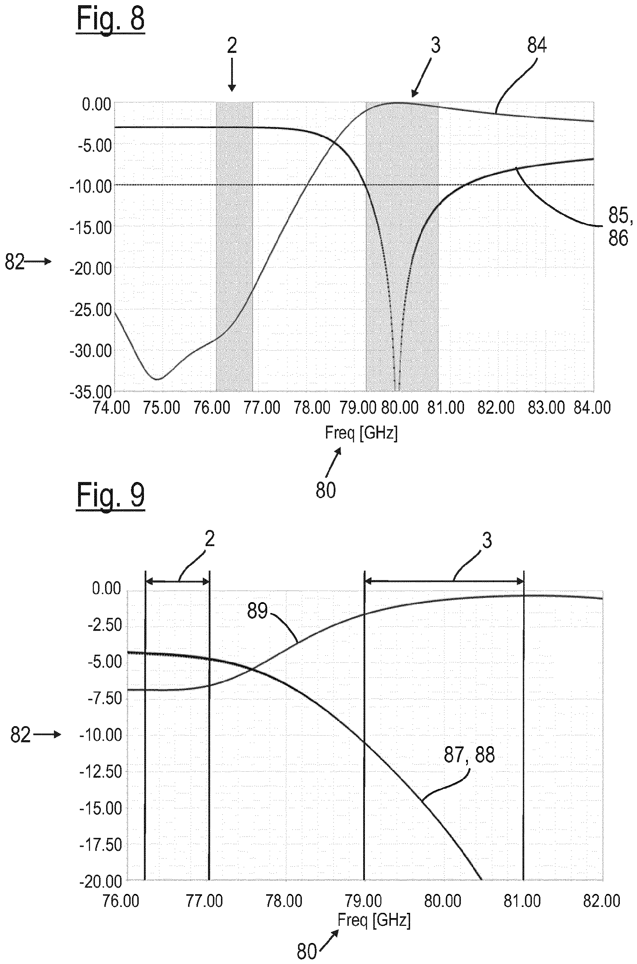

Fig. 8 shows frequency responses of the multiport filter 100. Thereby, a power ratio 82 is plotted versus frequency 80. The first frequency band 2 exemplary encompasses a range from 76.1 GHz to 76.9 GHz and the second frequency band 3 exemplarily encompasses a range from 79.2 GHz to 80.7 GHz.

Over the first frequency band 2, a reflected power ratio 84 between electromagnetic energy reflected at the first filter port 110 and electromagnetic energy received at the first filter port 110 is below -10 dB, exemplarily below -15 dB and below -20 dB. Over the second frequency band 3, the reflected power ratio 84 is above -3 dB, exemplarily above -2 dB and above -1 dB.

A first passed power ratio 85 between electromagnetic energy passed to the second filter port 115 and electromagnetic energy received at the first filter port 110 is above -5 dB, namely above -4 dB and above -3.5 dB within the first frequency band 2. Furthermore, a second passed power ratio 86 between electromagnetic energy passed to the third filter port 120 and electromagnetic energy received at the first filter port 110 is above -5 dB, namely above -4 dB and above -3.5 dB within the first frequency band 2. The second passed power ratio 86 thereby equals the first passed power ratio 85 at least in the first frequency band 2. With alternative embodiments, the second passed power ratio 86 may deviate from the first passed power ratio 85 for designs that implement an unequal splitting ratio between the second filter port 115 and the third filter port 120 within the first frequency band 2.

Within the second frequency band 3, both the first passed power ratio 85 and the second passed power ratio 86 are below -5 dB, such as below -7.5 dB and below -10 dB.

Fig. 9 shows frequency responses of the radio frequency network 1, namely a first power ratio 87 between electromagnetic energy transferred to the first output port 12 and electromagnetic energy received at the input port 10, a second power ratio 88 between electromagnetic energy transferred to the second output port 14 and electromagnetic energy received at the input port 10, and a third power ratio 89 between electromagnetic energy transferred to the third output port 16 and electromagnetic energy received at the input port 10.

The first power ratio 87 and the second power ratio 88 are above -7.5 dB, exemplarily above -5 dB and -4.5 dB, over the first frequency band 2 and below -8 dB, exemplarily below -9 dB and below -10 dB, over the second frequency band 3.

The third power ratio 89 is above -3 dB, exemplarily above -3 dB and above -1.5 dB, over the second frequency band 3 and below -6 dB, exemplarily below -6.5 dB and below -7 dB, over the first frequency band 2.

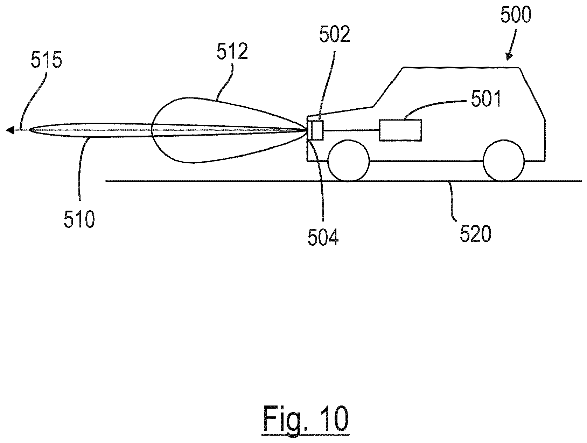

Fig. 10 shows a road vehicle 500 comprising the antenna device 504 with the radio frequency network 1 according to the present disclosure.

The antenna device 504 is configured to generate a first antenna pattern 510 for frequencies within the first frequency band 2 and a second antenna pattern 512 for frequencies within the second frequency band 3. The first antenna pattern 510 thereby is narrower in a transverse direction perpendicular to a forward direction 515 than the second antenna pattern 512. The forward direction 515 is exemplarily orientated parallel to a surface 520 that supports the road vehicle 500.

The first antenna pattern 510 is generated within the first frequency band 2 by both the third antenna element 63 and the first and second antenna elements 61, 62, wherein the second antenna pattern 512 is generated within the second frequency band 3 by only the third antenna element 63.

The radio frequency network 1 and the antenna device 504 form part of a radar device 502. The radar device 502 is configured to obtain information of an environment surrounding the vehicle 500 from reflections of radar signals formed by electromagnetic energy transmitted by the antenna device 504. The radar device 502, namely the radar circuit 70 of the radar device 502, is configured to adaptively switch between a first antenna configuration comprising the first antenna element 61, the second antenna element 62 and the third antenna element 63 and a second antenna configuration comprising only the third antenna element 63 by switching between the first frequency band 2 and the second frequency band 3. The first antenna configuration thereby generates the first antenna pattern 510 and the second antenna configuration generates the second antenna pattern 512.

The radar device 502 is connected to a driver assistance system 501 of the road vehicle 500 and configured to forward information on the environment obtained from the radar signals to the driver assistance system 501. Based on the information, the driver assistance system 501 is configured to perform vehicle control functions of the vehicle 500, such as lane keeping, adaptive cruise control or emergency brake assist.

The radar device 502, for example the radar circuit 70 of the radar device 502, may comprise electronic circuitry, such as one or more of a microwave circuit, a processing circuit, and a memory circuit, to obtain the information on the environment from the radar signals and/or to generate and receive the radar signals. Furthermore, the driver assistance system 501 may comprise electronic circuitry, such as one or more of a microwave circuit, a processing circuit, and a memory circuit, to perform the vehicle control functions based on the information received from the radar device 502.

Aspects of the present disclosure are given by the following enumerated embodiments:
1. A radio frequency network (1) for road vehicle applications,
   wherein the radio frequency network (1) comprises an input port (10), a first output port (12), a second output port (14), a third output port (16), and a multiport filter (100),
   wherein the multiport filter (100) comprises a first filter port (110) that couples the multiport filter (100) to the input port (10), a second filter port (115) that couples the multiport filter (100) to the first output port (12) and a third filter port (120) that couples the multiport filter (100) to the second output port (14),
   wherein the multiport filter (100) is configured to receive, at the first filter port (110), first electromagnetic energy (5) having a first frequency within a first frequency band (2) and second electromagnetic energy (9) having a second frequency within a second frequency band (3) from the input port (10),
   wherein the multiport filter (100) is configured to pass a first portion (6) of the first electromagnetic energy (5) from the first filter port (110) to the second filter port (115) and to pass a second portion (7) of the first electromagnetic energy (5) from the first filter port (110) to the third filter port (115),
   wherein the multiport filter (100) is configured to reflect the second electromagnetic energy (9) at the first filter port (110),
   wherein the third output port (16) is coupled in between the input port (10) and the first filter port (110) of the multiport filter (100),
   wherein the third output port (16) is configured to output the second electromagnetic energy (9).
2. Radio frequency network (1) according to embodiment 1,
   wherein the first frequency band (2) and the second frequency band (3) lie between 20 kHz and 3 THz.
3. Radio frequency network (1) according to at least one of the preceding embodiments,
   wherein the radio frequency network (1) configured as a microwave network,
4. Radio frequency network (1) according to at least one of the preceding embodiments,
   wherein the first frequency band (2) is different from the second frequency band (3),
   wherein, for example, the first frequency band (2) is separated from the second frequency band (3) by a bandgap.
5. Radio frequency network (1) according to at least one of the preceding embodiments,
   wherein the radio frequency network (1) is configured as a waveguide network, such as an air-filled waveguide network.
6. Radio frequency network (1) according to at least embodiment 5,
   wherein waveguides of the waveguide network have a rectangular cross section perpendicular to their propagation direction.
7. Radio frequency network (1) according to at least one of the preceding embodiments,
   wherein the radio frequency network (1) is bounded by a single hollow conductor (132).
8. Radio frequency network (1) according to at least one of the preceding embodiments,
   wherein the first portion (6) equals the second portion (7).
9. Radio frequency network (1) according to at least one of the preceding embodiments,
   wherein at least two, such as all, of a propagation direction (11) through the input port (10), a propagation direction (13) through the first output port (12) and a propagation direction (15) through the second output port (14) are parallel to a propagation plane (19),
   wherein a propagation direction (17) through the third output port (16) has an angle with respect to the propagation plane (19),
   wherein, for example, the propagation direction (17) through the third output port (16) is perpendicular to the propagation plane (19).
10. Radio frequency network (1) according to at least one of the preceding embodiments,
   wherein a propagation direction (111) through the first filter port (110) is perpendicular to a propagation direction (116) through the second filter port (115) and/or a propagation direction (121) through the third filter port (120).
11. Radio frequency network (1) according to at least one of the preceding embodiments, wherein the second filter port (115) and the third filter port (120) are located opposite from each other.
12. Radio frequency network (1) according to at least one of the preceding embodiments,
   wherein the multiport filter (100) is configured as a single radio frequency component, such as a cavity (130) bounded by a single hollow conductor (132), that forms a combined power divider and frequency filter.
13. Radio frequency network (1) according to at least embodiment 12,
   wherein the combined power divider and frequency filter is configured to pass the first electromagnetic energy (5) having the first frequency and to thereby split the first electromagnetic energy (5) into the first portion (6) and into the second portion (7) and configured to block the second electromagnetic energy (9) having the second frequency.
14. Radio frequency network (1) according to at least one of the preceding embodiments,
   wherein the multiport filter (100) comprises a cavity (130) bounded by a single hollow conductor (132),
   wherein the first filter port (110) is configured as a first waveguide opening in a first sidewall (135) of the cavity (130), the second filter port (115) is configured as a second waveguide opening in a second sidewall (140) of the cavity (130) and the third filter port (120) is configured as a third waveguide opening in a third sidewall (145) of the cavity (130).
15. Radio frequency network (1) according to at least embodiment 14,
   wherein the cavity (130) is bounded by a top plate (160) and a bottom plate (165),
   wherein the top plate (160) and the bottom plate (165) are oriented parallel to each other,
   wherein each of the first sidewall (135), the second sidewall (140) and the third sidewall (145) connect the top plate (160) and the bottom plate (165) with each other.
16. Radio frequency network (1) according to at least one of embodiments 14 and 15,
   wherein the first sidewall (135), the second sidewall (140) and the third sidewall (145) are orientated perpendicular to the top plate (160) and the bottom plate (165).
17. Radio frequency network (1) according to at least one of embodiments 14 to 16,
   wherein the cavity (130) is symmetric with respect to a symmetry plane (131), the symmetry plane (131) being parallel to a propagation direction (111) through the first filter port (110) and centered at the first filter port (110) in a direction perpendicular to the propagation direction (111) through the first filter port (110),
   wherein the second filter port (115) and the third filter port (120) are located at opposite sides of the symmetry plane (131).
18. Radio frequency network (1) according to at least one of embodiments 14 to 17,
   wherein the cavity (130) forms a distribution protrusion (152) located on a fourth sidewall (150) of the cavity (130),
   wherein the distribution protrusion (152) is located opposite the first filter port (110).
19. Radio frequency network (1) according to at least embodiment 18,
   wherein the distribution protrusion (152) is centered with respect to the first filter port (110).
20. Radio frequency network (1) according to at least one of embodiments 18 and 19,
   wherein the distribution protrusion (152) has a width (153) parallel to the fourth sidewall (150) and a depth (154) perpendicular to the fourth sidewall (150) of the cavity (130),
   wherein the width (153) is larger than the depth (154),
   wherein, for example, the width (153) is at least 2.5 times the depth (154),
   wherein, for example, the width (153) is at most 3 times the depth (154),
   wherein, for example, the width (153) is 2.7 times the depth (154).
21. Radio frequency network (1) according to at least one of embodiments 14 to 20,
   wherein the cavity (130) comprises a filter section forming a resonator (170, 180) for the first electromagnetic energy,
   wherein the resonator (170, 180) is coupled in between the first filter port (110) and the second filter port (115).
22. Radio frequency network (1) according to at least embodiment 21,
   wherein the resonator (170, 180) comprises a matching protrusion (172, 182) on a sidewall of the resonator (170, 180).
23. Radio frequency network (1) according to at least embodiment 22,
   wherein the sidewall of the resonator (170, 180) is formed by the first sidewall (135) comprising the first filter port (110).
24. Radio frequency network (1) according to at least one of embodiments 22 and 23,
   wherein the matching protrusion (172, 182) is located opposite a sidewall section (155, 156) of a further sidewall (150) of the resonator (170, 180),
   wherein the sidewall section (155, 156) is flat over at least the entire width of the matching protrusion (172, 182).
25. Radio frequency network (1) according to at least one of embodiments 22 to 24,
   wherein the matching protrusion (172, 182) has a width (173, 183) parallel to the sidewall of the resonator (170, 180) and a depth (174, 184) perpendicular to the sidewall of the resonator (170, 180),
   wherein the width (172, 182) is larger than the depth (174, 184),
   wherein, for example, the width (172, 182) is at least 2.5 times the depth (174, 184),
   wherein, for example, the width (172, 182) is at most 3 times the depth (174, 184),
   wherein, for example, the width (172, 182) is 2.7 times the depth (174, 184).
26. Radio frequency network (1) according to at least one of embodiments 14 to 25,
   wherein the second filter port (115) is connected to the cavity (130) by a port taper (117) that continuously narrows the cavity (130) towards the second filter port (115).
27. Radio frequency network (1) according to at least embodiment 26,
   wherein sidewalls (118) of the port taper (117) follow continuous smooth curves.
28. Radio frequency network (1) according to at least one of embodiments 26 and 27 and according to at least one of embodiments 22 to 25,
   wherein the port taper (117) is spaced apart from the matching protrusion (172, 182).
29. Radio frequency network (1) according to at least one of the preceding embodiments,
   wherein the radio frequency network (1) is configured to receive first input electromagnetic energy (4) having the first frequency within the first frequency band (2) at the input port (10),
   wherein the radio frequency network (1) is configured to pass a portion of the first input electromagnetic energy (4) to the third output port (16) and to pass a further portion of the first input electromagnetic energy (4) as the first electromagnetic energy (5) to the first filter port (110).
30. Radio frequency network (1) according to at least one of the preceding embodiments,
   wherein the third output port (16) is coupled in between the input port (10) and the first filter port (110) via a power splitter (200) having a first splitter port (210), a second splitter port (215) and a third splitter port (220),
   wherein the first splitter port (210) couples the power splitter (200) to the input port (10), the second splitter port (215) couples the power splitter (200) to the first filter port (110) and the third splitter port (220) couples the power splitter (200) to the third output port (16).
31. Radio frequency network (1) according to at least embodiment 30,
   wherein the power splitter (200) is configured to receive first input electromagnetic energy (4) having the first frequency within the first frequency band (2) from the input port (10),
   wherein the power splitter (200) is configured to pass a portion of the first input electromagnetic energy (4) to the third splitter port (220) and the third output port (16) and to pass a further portion of the first input electromagnetic energy (4) as the first electromagnetic energy (5) to the first filter port (110).
32. Radio frequency network (1) according to at least one of embodiments 30 and 31,
   wherein the first splitter port (210) is formed by a first opening in a first sidewall (212) of the power splitter (200) and the second splitter port (215) is formed by a second opening in a second sidewall (217) of the power splitter (200),
   wherein the first sidewall (212) is spaced apart from the second sidewall (217) parallel to a longitudinal axis (203),
   wherein the second opening is shifted with respect to the first opening parallel to a transverse axis (202), the transverse axis (202) being perpendicular to the longitudinal axis (203).
33. Radio frequency network (1) according to at least embodiment 32,
   wherein a center of the first opening and a center of the second opening are located on diametrically opposite halves of the first and second sidewall (212, 217) of the power splitter (200) parallel to the transverse axis (202).
34. Radio frequency network (1) according to at least one of embodiments 32 and 33,
   wherein the first opening is located at an end (213) of the first sidewall (212) of the power splitter (200) and the second opening is located at an end (218) of the second sidewall (217) of the power splitter (200) that is diametrically opposite from the end of the first sidewall (212) parallel to the transverse axis (202).
35. Radio frequency network (1) according to at least one of embodiments 32 to 34,
   wherein the first opening connects to the input port (10) via a first waveguide (30) and the second opening connects to the first filter port (110) via a second waveguide (35).
36. Radio frequency network (1) according to at least embodiment 35,
   wherein a sidewall (31) of the first waveguide (30) is flush with a third sidewall (230) of the power splitter (200) along the longitudinal axis (203) perpendicular to the transverse axis (202).
37. Radio frequency network (1) according to at least one of embodiments 35 and 36,
   wherein all sidewalls (37, 38) delimiting the second waveguide (35) perpendicular to the transverse axis (202) are shifted with respect to respective neighboring ends (218, 219) of the second sidewall (217).
38. Radio frequency network (1) according to at least one of embodiments 35 to 37,
   wherein at least one sidewall (37, 38) of the second waveguide (35), such as both sidewalls (37, 38) of the second waveguide (35), is connected to the second sidewall (217) of the power splitter (200) by a taper (216) that widens towards the second sidewall (217).
39. Radio frequency network (1) according to at least one of embodiments 35 to 38,
   wherein at least one sidewall (31, 32) of the first waveguide (30) is connected to the first sidewall (212) of the power splitter (200) by a taper (211) that widens towards the first sidewall (212).
40. Radio frequency network (1) according to at least one of embodiments 32 to 39,
   wherein the first sidewall (212) of the power splitter (200) and the second sidewall (217) of the power splitter (200) form sidewalls (212, 217) of a cavity (201) of the power splitter (200).
41. Radio frequency network (1) at least according to embodiment 40 and according to at least one of embodiments 35 to 40,
   wherein the cavity (201) has a height (205) in a height direction (204) perpendicular to the transverse axis (202) and perpendicular to the longitudinal axis (203) that is larger than a height (33) of the first waveguide (30) and/or a height (39) of the second waveguide (35) in the height direction (204).
42. Radio frequency network (1) according to at least one of the preceding embodiments,
   wherein the radio frequency network (1) is configured to receive input electromagnetic energy (8) having the second frequency within the second frequency band (2) at the input port (10),
   wherein the radio frequency network (1) is configured to guide at least a portion of the input electromagnetic energy (8) as the second electromagnetic energy (9) to the first filter port (110), and
   wherein the radio frequency network (1) is configured for constructive interference of the second electromagnetic energy (9) reflected at the first filter port (110) and the incoming input electromagnetic energy (8) at the third output port (16).
43. Radio frequency network (1) according to at least one of the preceding embodiments,
   wherein the radio frequency network (1) comprises a phase delay section (50), such as a meandering structure, coupled in between the third output port (16) and the multiport filter (100),
   wherein the phase delay section (50) comprises a first section end (52) coupling the phase delay section (50) to the third output port (16) and a second section end (54) coupling the phase delay section (50) to the first filter port (110),
   wherein a length of the phase delay section (50) is adapted to transfer the second electromagnetic energy (9) reflected from the first filter port (110) to the third output port (16) in phase with electromagnetic energy within the second frequency band (3) passing the third output port (16) from the input port (10) towards the first filter port (110).
44. Radio frequency network (1) according to at least embodiment 43,
   wherein the phase delay section (50) is adapted for constructive interference of the second electromagnetic energy (9) reflected from the first filter port (110) with the electromagnetic energy within the second frequency band (3) passing the third output port (16) from the input port (10) towards the first filter port (110).
45. Radio frequency network (1) according to at least one of embodiments 43 and 44,
   wherein the phase delay section (50) comprises a curve (56, 57, 58) that deflects a propagation direction (59) in the phase delay section (50) from a propagation direction (53) at the first section end (52) and/or from a propagation direction (55) at the second section end (54).
46. Radio frequency network (1) according to at least embodiment 45,
   wherein the curve (56, 57, 58) is part of a meandering structure comprising a further curve (56, 57, 58) having a curvature opposite a curvature of the curve (56, 57, 58).
47. Radio frequency network (1) according to at least one of embodiments 43 to 46,
   wherein the propagation direction (53) at the first section end (52) is parallel to the propagation direction (55) at the second section end (54).
48. An antenna device (504) for road vehicle applications comprising the radio frequency network (1) according to at least one of the preceding embodiments, a first antenna element (61), a second antenna element (62) and a third antenna element (63),
   wherein the first antenna element (61) is coupled to the first output port (12), the second antenna element (62) is coupled to the second output port (14) and the third antenna element (63) is coupled to the third output port (16).
49. A radar device (502) for road vehicle applications comprising the radio frequency network (1) of at least one of embodiments 1 to 47.
50. A road vehicle (500) comprising the radio frequency network (1) of at least one of embodiments 1 to 47.
51. A multiport filter (100) for road vehicle applications,
   wherein the multiport filter (100) comprises a first filter port (110), a second filter port (115), and a third filter port (120),
   wherein the multiport filter (100) is configured to receive, at the first filter port (110), first electromagnetic energy (5) having a first frequency within a first frequency band (2) and second electromagnetic energy (9) having a second frequency within a second frequency band (3),
   wherein the multiport filter (100) is configured to pass a first portion (6) of the first electromagnetic energy (5) from the first filter port (110) to the second filter port (115) and to pass a second portion (7) of the first electromagnetic energy (5) from the first filter port (110) to the third filter port (115),
   wherein the multiport filter (100) is configured to reflect the second electromagnetic energy (9) at the first filter port (110).

### List of reference signs

- 1: radio frequency network
- 2: first frequency band
- 3: second frequency band
- 4: first input electromagnetic energy
- 5: first electromagnetic energy
- 6: first portion
- 7: second portion
- 8: second input electromagnetic energy
- 9: second electromagnetic energy
- 10: input port
- 11: propagation direction
- 12: first output port
- 13: propagation direction
- 14: second output port
- 15: propagation direction
- 16: third output port
- 17: propagation direction
- 19: propagation plane
- 20: input guide
- 22: first output guide
- 24: second output guide
- 26: third output guide
- 30: first waveguide
- 31: sidewall
- 32: further sidewall
- 33: height
- 35: second waveguide
- 37: sidewall
- 38: further sidewall
- 39: height
- 50: phase delay section
- 52: first section end
- 53: propagation direction
- 54: second section end
- 55: propagation direction
- 56: curve
- 57: first further curve
- 58: second further curve
- 59: propagation direction
- 61: first antenna element
- 62: second antenna element
- 63: third antenna element
- 70: radar circuit
- 80: frequency
- 82: power ratio
- 84: reflected power ratio
- 85: first passed power ratio
- 86: second passed power ratio
- 87: first power ratio
- 88: second power ratio
- 89: third power ratio
- 100: multiport filter
- 110: first filter port
- 111: propagation direction
- 115: second filter port
- 116: propagation direction
- 117: port taper
- 118: sidewall
- 120: third filter port
- 121: propagation direction
- 122: further port taper
- 123: sidewall
- 130: cavity
- 131: symmetry plane
- 132: conductor
- 135: first sidewall
- 140: second sidewall
- 145: third sidewall
- 150: fourth sidewall
- 152: distribution protrusion
- 153: width
- 154: depth
- 155: sidewall section
- 156: further sidewall section
- 160: top plate
- 165: bottom plate
- 170: resonator (frequency filter)
- 172: matching protrusion
- 173: width
- 174: depth
- 175: distance
- 180: further resonator (further frequency filter)
- 182: further matching protrusion
- 183: width
- 184: depth
- 185: distance
- 190: power splitter
- 200: power splitter
- 201: cavity
- 202: transverse axis
- 203: longitudinal axis
- 204: height direction
- 205: height
- 210: first splitter port
- 211: taper
- 212: first sidewall
- 213: end
- 214: further end
- 215: second splitter port
- 216: taper
- 217: second sidewall
- 218: end
- 219: further end
- 220: third splitter port
- 230: third sidewall
- 235: fourth sidewall
- 241: propagation direction
- 245: propagation direction
- 250: propagation direction
- 255: distance
- 500: road vehicle
- 501: driver assistance system
- 502: radar device
- 504: antenna device
- 510: first antenna pattern
- 512: second antenna pattern
- 515: forward direction
- 520: road surface

## Claims

1. A radio frequency network (1) for road vehicle applications,
wherein the radio frequency network (1) comprises an input port (10), a first output port (12), a second output port (14), a third output port (16), and a multiport filter (100),
wherein the multiport filter (100) comprises a first filter port (110) that couples the multiport filter (100) to the input port (10), a second filter port (115) that couples the multiport filter (100) to the first output port (12) and a third filter port (120) that couples the multiport filter (100) to the second output port (14),
wherein the multiport filter (100) is configured to receive, at the first filter port (110), first electromagnetic energy (5) having a first frequency within a first frequency band (2) and second electromagnetic energy (9) having a second frequency within a second frequency band (3) from the input port (10),
wherein the multiport filter (100) is configured to pass a first portion (6) of the first electromagnetic energy (5) from the first filter port (110) to the second filter port (115) and to pass a second portion (7) of the first electromagnetic energy (5) from the first filter port (110) to the third filter port (115),
wherein the multiport filter (100) is configured to reflect the second electromagnetic energy (9) at the first filter port (110),
wherein the third output port (16) is coupled in between the input port (10) and the first filter port (110) of the multiport filter (100),
wherein the third output port (16) is configured to output the second electromagnetic energy (9).

2. Radio frequency network (1) according to claim 1,
wherein the radio frequency network (1) is configured as a waveguide network, such as an air-filled waveguide network.

3. Radio frequency network (1) according to at least one of the preceding claims,
wherein the first portion (6) equals the second portion (7).

4. Radio frequency network (1) according to at least one of the preceding claims,
wherein at least two, such as all, of a propagation direction (11) through the input port (10), a propagation direction (13) through the first output port (12) and a propagation direction (15) through the second output port (14) are parallel to a propagation plane (19),
wherein a propagation direction (17) through the third output port (16) has an angle with respect to the propagation plane (19),
wherein, for example, the propagation direction (17) through the third output port (16) is perpendicular to the propagation plane (19).

5. Radio frequency network (1) according to at least one of the preceding claims,
wherein the multiport filter (100) is configured as a single radio frequency component that forms a combined power divider and frequency filter,
wherein, for example, the combined power divider and frequency filter is configured to pass the first electromagnetic energy (5) having the first frequency and to thereby split the first electromagnetic energy (5) into the first portion (6) and into the second portion (7) and configured to block the second electromagnetic energy (9) having the second frequency.

6. Radio frequency network (1) according to at least claim 5,
wherein the single radio frequency component is configured as a cavity (130) bounded by a single hollow conductor (132),
wherein the first filter port (110) is configured as a first waveguide opening in a first sidewall (135) of the cavity (130), the second filter port (115) is configured as a second waveguide opening in a second sidewall (140) of the cavity (130) and the third filter port (120) is configured as a third waveguide opening in a third sidewall (145) of the cavity (130).

7. Radio frequency network (1) according to at least claim 6,
wherein the cavity (130) forms a distribution protrusion (152) located on a fourth sidewall (150) of the cavity (130),
wherein the distribution protrusion (152) is located opposite the first filter port (110),
wherein, for example, the distribution protrusion (152) is centered with respect to the first filter port (110).

8. Radio frequency network (1) according to at least one of claims 6 to 7,
wherein the cavity (130) comprises a filter section forming a resonator (170, 180) for the first electromagnetic energy,
wherein the resonator (170, 180) is coupled in between the first filter port (110) and the second filter port (115).

9. Radio frequency network (1) according to at least claim 8,
wherein the resonator (170, 180) comprises a matching protrusion (172, 182) on a sidewall of the resonator (170, 180),
wherein, for example, the sidewall of the resonator (170, 180) is formed by the first sidewall (135) comprising the first filter port (110).

10. Radio frequency network (1) according to at least claim 9,
wherein the matching protrusion (172, 182) is located opposite a sidewall section (155, 156) of a further sidewall (150) of resonator (170, 180),
wherein the sidewall section (155, 156) is flat over at least the entire width of the matching protrusion (172, 182).

11. Radio frequency network (1) according to at least one of the preceding claims,
wherein the radio frequency network (1) is configured to receive first input electromagnetic energy (4) having the first frequency within the first frequency band (2) at the input port (10),
wherein the radio frequency network (1) is configured to pass a portion of the first input electromagnetic energy (4) to the third output port (16) and to pass a further portion of the first input electromagnetic energy (4) as the first electromagnetic energy (5) to the first filter port (110).

12. Radio frequency network (1) according to at least one of the preceding claims,
wherein the third output port (16) is coupled in between the input port (10) and the first filter port (110) via a power splitter (200) having a first splitter port (210), a second splitter port (215) and a third splitter port (220),
wherein the first splitter port (210) couples the power splitter (200) to the input port (10), the second splitter port (215) couples the power splitter (200) to the first filter port (110) and the third splitter port (220) couples the power splitter (200) to the third output port (16),
wherein the first splitter port (210) is formed by a first opening in a first sidewall (212) of the power splitter (200) and the second splitter port (215) is formed by a second opening in a second sidewall (217) of the power splitter (200),
wherein the first sidewall (212) is spaced apart from the second sidewall (217) parallel to a longitudinal axis (203),
wherein the second opening is shifted with respect to the first opening parallel to a transverse axis (202), the transverse axis (202) being perpendicular to the longitudinal axis (203).

13. Radio frequency network (1) according to at least one of the preceding claims,
wherein the radio frequency network (1) is configured to receive input electromagnetic energy (8) having the second frequency within the second frequency band (2) at the input port (10),
wherein the radio frequency network (1) is configured to guide at least a portion of the input electromagnetic energy (8) as the second electromagnetic energy (9) to the first filter port (110), and
wherein the radio frequency network (1) is configured for constructive interference of the second electromagnetic energy (9) reflected at the first filter port (110) and the incoming input electromagnetic energy (8) at the third output port (16).

14. Radio frequency network (1) according to at least one of the preceding claims,
wherein the radio frequency network (1) comprises a phase delay section (50), such as a meandering structure, coupled in between the third output port (16) and the multiport filter (100),
wherein the phase delay section (50) comprises a first section end (52) coupling the phase delay section (50) to the third output port (16) and a second section end (54) coupling the phase delay section (50) to the first filter port (110),
wherein a length of the phase delay section (50) is adapted to transfer the second electromagnetic energy (9) reflected from the first filter port (110) to the third output port (16) in phase with electromagnetic energy within the second frequency band (3) passing the third output port (16) from the input port (10) towards the first filter port (110),
wherein, for example, the phase delay section (50) is adapted for constructive interference of the second electromagnetic energy (9) reflected from the first filter port (110) with the electromagnetic energy within the second frequency band (3) passing the third output port (16) from the input port (10) towards the first filter port (110).

15. An antenna device (504) for road vehicle applications comprising the radio frequency network (1) according to at least one of the preceding claims, a first antenna element (61), a second antenna element (62) and a third antenna element (63),
wherein the first antenna element (61) is coupled to the first output port (12), the second antenna element (62) is coupled to the second output port (14) and the third antenna element (63) is coupled to the third output port (16).
